(19) **Europäisches Patentamt**
**European Patent Office**
**Office européen des brevets**

(11) **EP 2 275 385 B1**

(12) **EUROPEAN PATENT SPECIFICATION**

(45) Date of publication and mention
of the grant of the patent:
**04.11.2015 Bulletin 2015/45**

(51) Int Cl.:
***C01B 31/04*** (2006.01)    ***C09C 1/46*** (2006.01)
***C09C 3/04*** (2006.01)    ***C09C 1/00*** (2006.01)

(21) Application number: **09165606.6**

(22) Date of filing: **15.07.2009**

(54) **Method of producing platelets comprising a layered material**

Verfahren zur Herstellung von Plättchen mit einem geschichteten Material

Procédé de fabrication de plaquettes comprenant un matériau stratifié

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**19.01.2011 Bulletin 2011/03**

(73) Proprietor: **Friedrich-Alexander-Universität
Erlangen-Nürnberg
91054 Erlangen (DE)**

(72) Inventors:
 • **Peukert, Wolfgang
  85570, Markt Schwaben (DE)**
 • **Knieke, Catharina
  91054, Erlangen (DE)**
 • **Voigt, Michael
  90427, Nürnberg (DE)**
 • **Koch, Thomas
  90427, Nürnberg (DE)**
 • **Roßkopf, Christian
  86609, Donauwörth (DE)**
 • **Berger, Angela
  71101, Schönaich (DE)**

(74) Representative: **Huebner, Stefan Rolf et al
sr Huebner & Kollegen
Prinzregentenplatz 11
81675 München (DE)**

(56) References cited:
 **WO-A-2008/143692     US-A1- 2002 054 995
 US-A1- 2008 279 756**

 • **JANOT R ET AL: "Ball-milling: the behavior of
  graphite as a function of the dispersal media"
  CARBON, ELSEVIER, OXFORD, GB, vol. 40, no.
  15, 1 January 2002 (2002-01-01), pages 2887-2896,
  XP004389331 ISSN: 0008-6223**
 • **WELHAM N J ET AL: "Effect of extended ball
  milling on graphite" JOURNAL OF ALLOYS AND
  COMPOUNDS, ELSEVIER SEQUOIA,
  LAUSANNE, CH, vol. 349, no. 1-2, 3 February 2003
  (2003-02-03), pages 255-263, XP004400119 ISSN:
  0925-8388**
 • **CHEN ET AL: "Surfactant-assisted de-
  agglomeration of graphite nanoparticles by wet
  ball mixing" JOURNAL OF MATERIALS
  PROCESSING TECHNOLOGY, ELSEVIER, NL,
  vol. 190, no. 1-3, 11 May 2007 (2007-05-11), pages
  61-64, XP022070971 ISSN: 0924-0136**

**Description**

*Field of the invention*

The invention relates to a method of producing from particles of a layered material, e.g. graphite, platelets comprising the layered material, wherein the particles are exposed to a mechanical grinding treatment.

*Background of the invention*

Layered materials such as graphite and in particular the individual layers of these materials are currently under intense investigation, as their crystal structure can provide them with new and useful properties. Graphite is a well-known allotropic form of carbon. It consists of stacks of parallel two-dimensional graphene sheets. Each graphene sheet has a two-dimensional hexagonal lattice of $sp^2$-hybridized carbon atoms. In a graphite crystal the individual graphene layers are held together by weak van der Waals-forces, while within each graphene layer the carbon atoms are covalently bound. It is believed that it is this anisotropy that provides individual graphene layers (single layer graphene) and stacks of only a few graphene layers (multi layer graphene) with their unique mechanical, thermal and electrical properties. These properties are similar and sometimes even superior to those of carbon nanotubes. Thus, there is a keen interest in finding way to mass produce single layer and multi-layer graphene in order to exploit its properties on an industrial scale.

In K. S. Novoselov et al., "Electric field effect in atomically thin carbon films", Science 2004, 306(5696), 666-9, it is disclosed that individual graphene sheets are thermodynamically stable and can be exfoliated and placed on a silicon dioxide substrate by means of an adhesive film. The requirement of an adhesive film may render it difficult, however, to scale the method up to mass production.

A method of exfoliating individual graphene layers and thin platelets consisting of several graphene layers stacked on top of each other by means of sonication is disclosed in M. Lotya et al., "Liquid Phase Production of Graphene by Exfoliation of Graphite in Surfactant/Water Solutions", Journal of the American Chemical Society (2009), 131(10), 3611-3620. Moreover, the US Patent Application Publication US 2008/0279756 A1 discloses a method in which graphite particles exfoliated by means of sonication were subsequently ground in a planetary ball mill. It is a possible disadvantage of such ultrasound-based methods that ultrasound decays rapidly when coupled into larger volumes, which may lead to an inhomogeneous stress energy exposure of the particles to be exfoliated.

In H. Schniepp et al., "Functionalized Single Graphene Sheets Derived from Splitting Graphite Oxide", Journal of Physical Chemistry B (2006), 110(17), 8535-8539, a method is disclosed, which by means of intercalating oxygen between adjacent graphene planes the distance between the planes is increased. Individual planes are then exfoliated by expanding the material with high heating rates. Alternatively, ultrasound can be used as disclosed in S. Stankovich et al., "Stable aqueous dispersions of graphitic nanoplatelets via the reduction of exfoliated graphite oxide in the presence of poly(sodium 4-styrenesulfonate)", Journal of Materials Chemistry (2006), 16(2), 155-158. In the US Patent Application US 2008/0258359 A1, a graphite intercalation compound is first expanded for partial exfoliation and then subjected to a mechanical shearing treatment to produce fully separated planes.

A method for forming monocrystalline graphene layers on a silicone carbide substrate is disclosed in C. Berger et al., "Electronic Confinement and Coherence in Patterned Epitaxial Graphene", Science (Washington, DC, United States) (2006), 312(5777), 1191-1196. The silicone carbide surface is heated to above 1400 °C. As silicone has a higher vapour pressure than carbon, the silicone atoms evaporate first, thus leaving behind a monocrystalline graphene layer.

In N. Liu et al., One-step ionic-liquid-assisted electrochemical synthesis of ionic-liquid-functionalized graphene sheets directly from graphite", Advanced Functional Materials (2008), 18(10), 1518-1525, a method is disclosed in which graphite electrodes can be exfoliated electrochemically and functionalized in an ionic liquid.

US 2002/054995 A1 discloses a method in which thin graphite platelets are manufactured in a high-pressure mill by means of fluid jets that cause fluid to enter the tips of cracks in graphite particles, thus separating the graphite into platelets. Thereby, the inventors seek to obtain platelets with a thickness in the range of 1 to 100 nm.

In the patent application publication WO 2008/143692 A1 a method for the manufacture of graphite nano platelets is disclosed in which an intercalation and expansion step is followed by a "shear-mixing" step in a solvent, which step in turn is followed by ultrasonication. In one example, average platelets thicknesses of 1.5 nm are reported.

Janot, Raphael et al. in "Ball-milling: the behavior of graphite as a function of the dispersal media", Carbon (2002), 40, 2887 discribe wet milling experiments with graphite in a planetary ball-mill. In the experiments graphite platelets with a thickness of about 20 nm were produced.

In Welham, N.J. et al., "Effect of extended ball milling on graphite", Journal of Alloys and Compounds (2003), 349, 255 a method is disclosed where graphite is dry milled in a custom-made tumbling ball mill. Mostly rounded particles with a broad size distribution were obtained and in some instances the observed particles exhibited almost delaminated single sheets or carbon.

Chen, Chun-Nan et al. in "Surfactant-assisted de-agglomeration of graphite nanoparticles by wet ball milling", Journal of Materials Processing Technology (2007), 190, 61 describe a method in which graphitic carbon black is subjected to a wet milling treatment. Globular particles with diameter of around 30 nm are obtained.

*Problem to be solved by the invention*

It is an objective of the present invention to provide an improved method of producing from particles of a layered material platelets comprising the layered material, wherein the particles are exposed to a mechanical grinding treatment.

*Solution according to the invention*

In one aspect of the invention, the problem is solved by a method of producing from particles of a layered material platelets comprising the layered material, wherein the particles are exposed to a mechanical grinding treatment using grinding media, the stress energy $SE_{GM}$ of the grinding media being smaller than 10 $\mu$Nm (micro newton meters).

In the context of the present invention, the stress energy of the grinding media $SE_{GM}$ is defined as a function of the diameter of a bead of the grinding media $d_{GM}$, the beads weight density $\rho_{GM}$ and the maximum velocity $v_{max}$ the bead can reasonably reach when it is stressing a particle of the layered material:

$$SE_{GM} = (d_{GM})^3 \cdot \rho_{GM} \cdot (v_{max})^2$$

Advantageously, methods that employ grinding media can lend themselves to being scaled-up, rendering them suitable for mass production of the platelets or platelet suspension according to the invention.

In the context of the present invention, "non-expanded" with reference to a particle means that before being exposed to the mechanical milling treatment, the layered material of the particle has not been expanded by means of an expandable intercalation agent intercalated between layers of the layered material. In the context of the present invention, "non-sonicated" with reference to a particle means that before being exposed to the mechanical grinding treatment, the layered material of the particle has not been exposed to ultrasound waves. In other words, the conditions of the grinding treatment are selected such that a sonication step or an expansion step is not required. These solutions encompass all embodiments in which the grinding conditions are accordingly selected, regardless of whether the particles actually used are pre-treated by sonication or expansion, or not.

A platelet of the layered material in the context of the present invention may comprise one layer or several parallel layers of the layered material. Each platelet has a length and a width parallel to the plane(s) of the layer(s) and a thickness orthogonal to the plane(s).

The inventors have found that, surprisingly, platelets of the layered material with favourable properties can be produced merely by a mechanical grinding treatment. This is in contrast to the teaching of the prior art, according to which mechanical grinding is only applied to particles that had previously been at least pre-exfoliated by other methods, notably expansion or sonication.

Advantageously, according to the invention platelets of the layered material can be exfoliated in a single mechanical step, thereby allowing for a cost-effective production. Moreover, it is an achievable advantage of the method according to the invention that it lends itself to scale-up, which may allow for cost-effective mass production of platelets of the layered material.

Also advantageously, the distribution of thicknesses of the platelets generated by the method according to the invention as well as the defect density in the final product may be controlled by means of the grinding conditions. Both the thickness and the defect density are important parameters that define amongst other things the mechanical, thermal and electrical properties of the final product. Therefore, advantageously, with the method according to the invention a large selection of products with different properties can be provided for.

It is an achievable advantage of the invention that nanoscaled platelets of the layered material can be produced that have a high aspect ratio. Typically, the length and width of the platelets are greater than 0.1 $\mu$m (micrometers), preferably greater than 0,2 $\mu$m, preferably greater than 0,5 $\mu$m. Preferably the length and width are smaller than 20 $\mu$m, more preferably smaller than 5 $\mu$m.

*Preferred embodiments of the invention*

Preferred features of the invention which may be applied alone on combination are discussed below and in the dependent claims.

In the method according to the invention, the stress energy $SE_{GM}$ of the grinding media used in the grinding treatment is smaller than 10 $\mu$Nm. More preferably, the stress energy $SE_{GM}$ is smaller than 3 $\mu$Nm, more preferably smaller than 1 $\mu$Nm, more preferably smaller than 0.3 $\mu$Nm, more preferably smaller than 0.1 $\mu$Nm. Advantageously, a low stress energy can contribute to a high aspect ratio of the final product. It is believed that this is at least partly due to the fact that a low stress energy can help to avoid breakage of the layers of the layered material.

In a preferred embodiment of the invention, at least some of the platelets thus generated are less than 100 nm thick, more preferably less than 20 nm, more preferably less than 4 nm, more preferably less than 3.4 nm, more preferably less than 2 nm, more preferably less than 1nm. More preferably, at least 1%, more preferably at least 2%, more preferably at least 5%, more preferably at least 10%, more preferably at least 20%, more preferably at least 50% of the platelets are less than 100 nm thick, more preferably less than 20 nm, more preferably less than 4 nm, more preferably less than 3.4 nm, more preferably less than 2 nm, more preferably less than 1 nm. More preferably, the arithmetic mean thickness of the platelets is less than 100 nm, more preferably less than 20 nm, more preferably less than 4 nm, more preferably less than 3.4 nm, more preferably less than 2 nm, more preferably less than 1 nm.

Preferably, the platelets produced by the mechanical grinding treatment comprise single layer platelets. More preferably, at least 1%, more preferably at least 2%, more preferably at least 4% of the platelets generated are single layer platelets. Preferred single layer platelets are single layer graphene platelets. In the context of the present invention, a single layer graphene platelet in an individual graphene sheet that is composed of carbon atoms occupying a two-dimensional hexagonal lattice.

The preferred grinding treatment is a wet-grinding treatment. In other words, in a preferred method according to the invention, the particles of the layered material are mixed in a liquid medium, and the mixed-in particles are exposed to a mechanical grinding treatment to produce platelets of the layered material. The preferred mixture is a dispersion, more preferably a suspension, of the particles in the liquid medium. The mixture may be a slurry.

In a preferred method according to the invention, the content of the layered material in the mixture is more than 0.01 wt% (weight percent), preferably more than 0.1 wt%, preferably more than 1 wt%, preferably more than 3 wt%. A high content of the layered material can facilitate further processing of the product. On the other hand, a high content of layered material may increase the grinding time required to achieve the desired degree of exfoliation and thinness of the platelets. As a rule of thumb, doubling the content of the material doubles the grinding time required. Too long a grinding time may entail breakage of layers of the layered material due to overstrain, which in turn can reduce the lengths and widths of the platelets obtained. Moreover, in a dispersion too high a content of the material may render the dispersion instable. It is believed that this at least partly is due to a too small inter-particle distance as the size of the particles is reduced in the grinding treatment. Preferably, the content of the layered material in the mixture is less than 50 wt%, more preferably less than 30 wt%, e.g. 10 wt%.

The preferred mixture medium is an aqueous medium, preferably deionised water. However, the invention also encompasses embodiments in which the mixture medium is e.g. an organic medium. The mixer medium may also be a mixture of several liquids, including mixtures of organic and inorganic liquids. Preferred organic liquids include alcohols such as EtOH. Moreover, liquids whose surface energy is similar to that of graphene are preferred, e.g. n-methyl-pyrrolidone (NMP). It is an achievable advantage of such liquids that due to its interaction with the layered material it can promote the delamination process (see e.g. Y. Hernandez et al, "High-yield production of graphene by liquid-phase exfoliation of graphite", Nature Nanotechnology, vol. 3, September 2008, published online 10 August 2008, doi 10.1038/nnano.2008.215).

In a preferred method according to the invention, the mixture contains a surfactant. Preferred surfactants are ionic surfactants, e.g. anionic surfactants, such as SDS (Sodium-Dodecyl-Sulphate) or SDBS (Sodium-Dodecyl-Benzol-Sulphonate). Advantageously, the surfactant can act as a stabilizing agent. It is believed that this is due to the surfactant adsorbing to the platelets, thereby preventing, preferably by electrostatic and/or steric effects, that the platelets agglomerate or that the exfoliation process is even (partially) reversed. With this embodiment of the invention, advantageously a stable suspension of platelets with a considerable long-term stability of the platelets dispersion can be achieved. Preferably a $\zeta$ potential of the dispersion is greater than 20 mV (microvolts), more preferably greater than 30 mV, more preferably greater than 50 mV.

The appropriate amount of surfactants can be determined by means of measuring an adsorption isotherme as e.g. disclosed in Lin, Shi-Yow et al., " Determination of adsorption of an ionic surfactant on latex from surface tension measurements", Colloids and Surfaces, A: Physicochemical and Engineering Aspects (2002), 196(2-3), 189-198.

Grinding preferably is achieved by collision, compressive forces, and/or attrition, such as friction-induced attrition. The milling beads preferably are 800 $\mu$m or less in diameter, more preferably 200 $\mu$m or less, more preferably 100 $\mu$m or less, more preferably 50 $\mu$m or less. It is an achievable advantage of smaller milling beads that their kinetic energy and therefore their stress energy of the beads can be reduced, which in turn can help to avoid breakage of individual layers of the layered material. It is another achievable advantage of small milling beads is that more beads can be provided in the same volume of the milling chamber, which may help to accelerate exfoliation. Preferably, the amount of milling beads is chosen such that the dry milling beads can fill up about 80% to 90% of the milling chamber.

The milling beads preferably have weight densities lower than 6100 kg/m$^3$ (kilogram per cubic meter), preferably lower than 1100 kg/m$^3$. It is an achievable advantage of milling beads with lower weight density that the kinetic energy of the beads can be reduced, which intern can help to avoid breakage of individual layers of the layered material.

Preferred milling bead materials are yttrium stabilized zirconia, aluminia, or plastics such as polystyrol and polymethyl methacrylate (PMMA) or mixtures of these. In one preferred embodiment, at least some, more preferably essentially all, of the milling beads are of the same layered material as the particles, thereby providing for at least partially autogenous grinding. This way, advantageously, contamination of the milling product by wear debris from the milling beads can be avoided. Moreover, costs can be reduced as e.g. graphite is more affordable than yttrium stabilized zirconia.

In a preferred method according to the invention, the mechanical grinding treatment is applied to the particles by means of a stirred media mill. Alternatively, e.g. a tumbling ball mill, a rocker mill or a planetary ball mill may be applied.

The maximum circumferential velocity of the stirrer of the stirred media mill is smaller than 60 m/s. More preferably, the maximum circumferential velocity is smaller than 40 m/s, more preferably less than 10 m/s, more preferably less than 5 m/s. The maximum circumferential velocity preferably is more than 0.1 m/s, preferably more than 0.3 m/s, preferably more than 1 m/s. Preferably, the revolution speed of the stirrer is 3000 rpm or less, preferably 1500 rpm or less. Preferred revolution speeds of the stirrer are 30 rpm or above, more preferably 100 rpm or above, more preferably 300 rpm or above. In a stirred media mill, the stress energy can be controlled by adjusting the maximum circumferential velocity $v_t$ of the stirrer, the weight density $\rho_{GM}$ of the milling beads and the diameter $d_{GM}$ of the milling beads according to the formula

$$\mathrm{SE_{GM}} = (d_{GM})^3 \cdot \rho_{GM} \cdot (v_t)^2.$$

In a preferred method according to the invention, the particles comprise graphite or a graphite derivative as the layered material. The particles may e.g. consist of natural graphite, synthetic graphite, highly oriented pyrolytic graphite, graphite oxide, graphite fluoride, graphite fibres, graphite nano-fibres or a combination thereof. Preferred particles are polycrystalline. Typically, they contain micron- and/or nanometer scaled graphite crystallites, with each crystallite being composed of one sheet or several sheets of graphene. The invention, however, also encompasses methods in which monocrystalline particles are applied. The particles preferably are provided as a powder containing fine graphite granules or flakes, short segments of carbon fibre or graphite fibre, carbon or graphite whiskers, carbon or graphitic nanofibres or their mixture. The powder can be prepared e.g. by chopping or grinding, preferably dry-grinding, of larger particles or fibres.

Apart from graphite, the method according to the invention may also be applied to other layered materials such as anthracene, molybdenum disulfide, niobium selenide, or phyllosilicates. Of course the method according to the invention is also applicable to expanded or partially exfoliated layered materials, e.g. materials pre-treated by sonication. Preferred particles of the layered materials are 300 μm or less in diameter, preferably 100 μm or less, more preferably 30 μm or less, more preferably 10 μm or less. Preferred particles are more than 0.1 μm, more preferably more than 0.3 μm, more preferably 1 μm or more in diameter.

Preferably the layers of the layered material are graphene layers. In certain methods according to the invention, the graphene layers may or may not be oxidised, fluoridised or otherwise derivatised or functionalised. The length and the width of at least some of the platelets preferably are greater than 0.1 μm, more preferably greater than 0.2 μm, more preferably greater than 0.5 μm, more preferably greater than 1 μm, more preferably greater than 2 μm. More preferably, at least 1%, more preferably at least 2%, more preferably at least 5%, more preferably at least 10%, more preferably at least 20%, more preferably at least 50% of the platelets have length and the width greater than 0.1 μm, more preferably greater than 0.2 μm, more preferably greater than 0.5 μm, more preferably greater than 1 μm, more preferably greater than 2 μm.

The grinding treatment according to the invention preferably is performed at a temperature below 150°C, preferably below 100°C, preferably below 50°C, preferably around 20°C, preferably at even lower temperatures depending on the chosen fluid. It is an achievable advantage of lower temperatures that they can increase shear forces, thereby furthering exfoliation.

In a preferred method according to the invention, the particles are exposed to a mechanical grinding treatment, the grinding conditions being selected such that from a non-sonicated and non-expanded form of the particles of the layered material by means of the mechanical grinding treatment platelets of the layered material are formed, at least some of the platelets generated from the non-sonicated and non-expanded form of the particles being less than 4 nm thick. Preferably, 1%, more preferably 2%, more preferably 5%, more preferably 10%, more preferably 20%, more preferably 50% of the platelets generated from the non-sonicated and non-expanded form of the particles are less than 3.5 nm, more preferably less than 2 nm thick.

In a preferred method according to the invention, the particles are exposed to a mechanical grinding treatment, the grinding conditions being selected such that from a non-sonicated and non-expanded form of the particles of the layered material by means of the mechanical grinding treatment platelets of the layered material are produced, at least some of the platelets produced from the non-sonicated and non-expanded form of the particles being single layer platelets, preferable single layer graphene platelets. More preferably, at least 1%, more preferably at least 2%, more preferably at least 4% of the platelets generated are single layer platelets, more preferably single layer graphene platelets.

*Brief description of the drawing*

The invention is illustrated in greater detail with the aid of schematic drawings.

Fig.1　shows the distribution of the number density $n$ of the thicknesses $d$ of platelets from graphite particles stressed under the conditions of a first example of the invention;

Fig. 2　shows the distribution of the cumulative thickness $Q_0$ of platelets from graphite particles stressed under the condition of the first example of the invention;

Fig. 3　shows the heights profile across three platelets produced under the conditions of example 1 of the invention and deposited on a silicon dioxide substrate; and

Fig. 4　shows the distribution of the number of density $n$ of the thicknesses $d$ of platelets from graphite particles stressed under the conditions of a second example of the invention;

Fig. 5　shows the distribution of the cumulative thickness $Q_0$ of platelets from graphite particles stressed under the condition of the second example of the invention;

Fig. 6　shows the heights profile across an exemplary platelet produced under the conditions of example 2 of the invention and deposited on a silicon dioxide substrate; and

Fig. 7　shows an atomic force micrograph of graphite platelets produced under the conditions of the second example of the invention and deposited on silicone dioxide substrate.

*Detailed description of embodiments of the invention*

*Example 1*

1.53 g graphite powder type GS 6 purchased from RMC Remacon GmbH, Bad Säckingen, Germany, was dispersed in 150 g de-ionized water to provide for a solid content of graphite in the dispersion of 1 wt%. Moreover, 0.345 g of SDS was added, yielding a SDS concentration of 8 mmol/L. As milling beads, 1.7 kg of yttrium stabilized zirconia milling beads with a weight density of 6050 kg/m$^3$ and a diameter of 100 $\mu$m were used. Alternatingly, small quantities of the mixture and milling beads were filled into the 0.6 L alumina milling chamber of a PE075 stirred media mill, available from Netzsch Feinmahltechnik GmbH, 95100 Selb, Germany. By means of a cooler applied on the outside of the milling chamber, the content of the chamber is cooled down to a temperature of 20°C.

The mill's stirrer, which consists of 3 eccentrically arranged perforated disks of zirconia , is set to a speed of 1500 rpm, corresponding to a maximum circumferential velocity of $v_t$ = 4.7 m/s. The stress energy was calculated by the formula

$$\mathrm{SE}_{GM} = (d_{GM})^3 \cdot \rho_{GM} \cdot (v_t)^2$$

to be 0.134 $\mu$Nm.

After five hours of grinding, an appropriate amount of the suspension was spread on a cleaned silicon wafer with a well-defined 300 nm thick silicon dioxide surface by means of spin coating at 3000 rpm.

Subsequently, the thickness profile of 300 platelets was measured by atomic force microscopy, using a Veeco-Multimode AFM (Atomic Force Microscope), available from Veeco, Digital Instruments, Santa Barbara, CA, USA. Most specifically, the topography of the platelets on the wafer surface was measured in tapping mode and the height profile of the platelets was extracted from the measured AFM data. In all the results presented here, the stabilizing agent SDS was still present on the particle surface and increases the measured thickness of the graphite platelets.

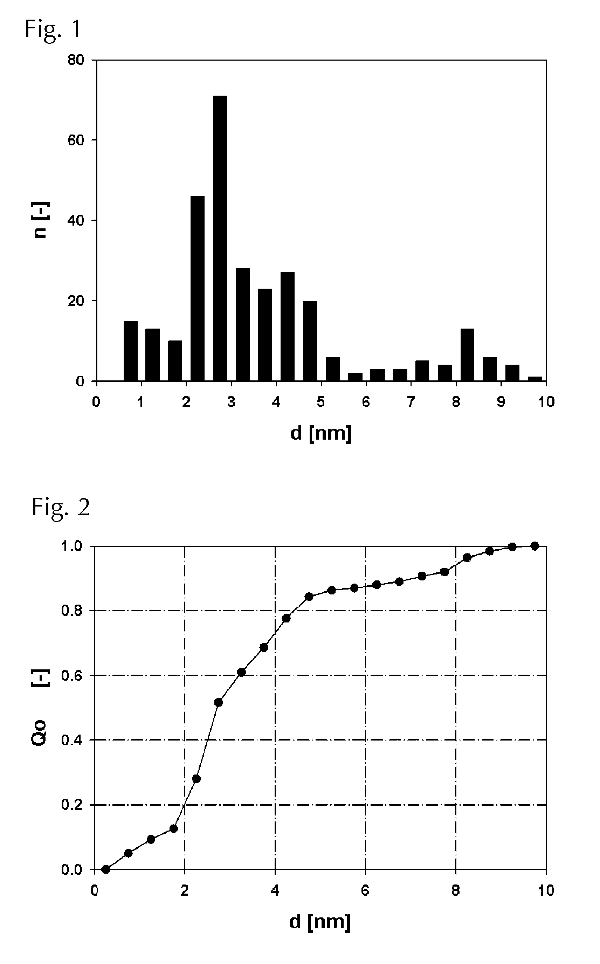

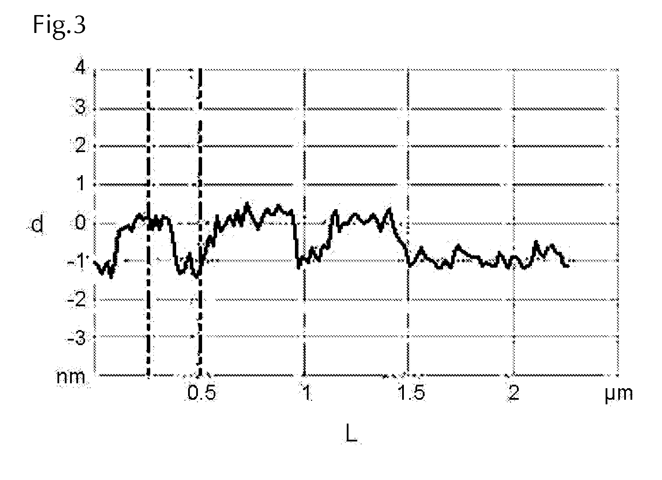

The distribution of the number density $n$ of the thicknesses $d$ of the graphite platelets is shown in Fig. 1, and Fig. 2 shows the corresponding cumulative distribution $Q_0$ of thicknesses. Even though the exact heights of the SDS layer on the graphite plates is not known exactly, it can be assumed that those platelets with heights of less than one nanometer are single layer graphene platelets. Fig. 3 shows the height $d$ profile across three such single layer graphene platelets. The value of L indicates the position along a line in the plane of the platelet.

The cumulative thickness distribution of that mean value $d_{50}$ was determined to be 2.7 nm. In other words, 50% of the platelets are equal to or less than 2.7 nm in thick. About 5% of the platelets are single layer graphene platelets.

*Example 2*

The second example differs from example 1 in that this time yttrium stabilized zirconia milling beads with a diameter of only 50 $\mu$m were used as milling beads. The stress energy was calculated by the formula

$$\mathrm{SE}_{GM} = (d_{GM})^3 \cdot \rho_{GM} \cdot (v_t)^2$$

to be 0.0167 $\mu$Nm.

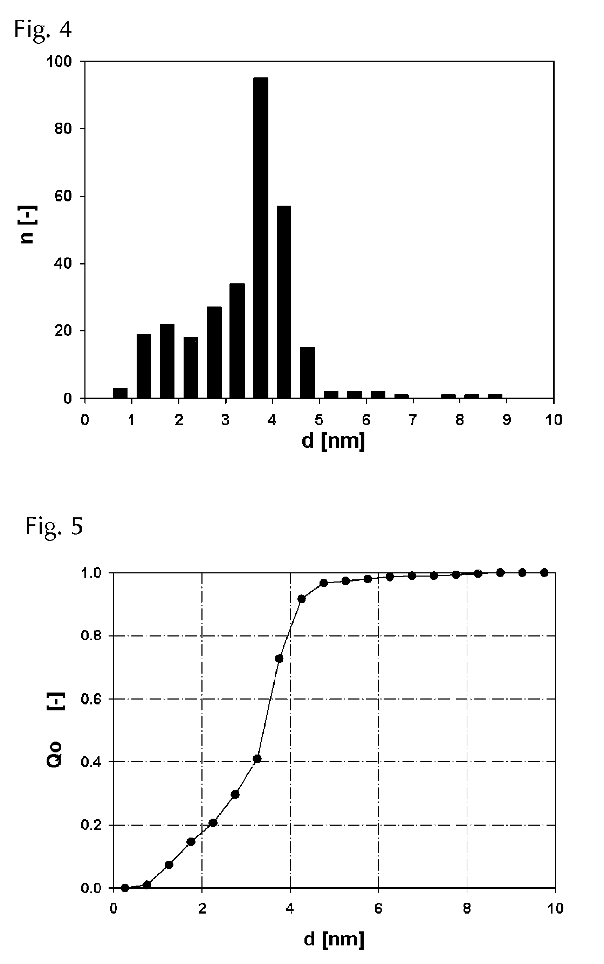

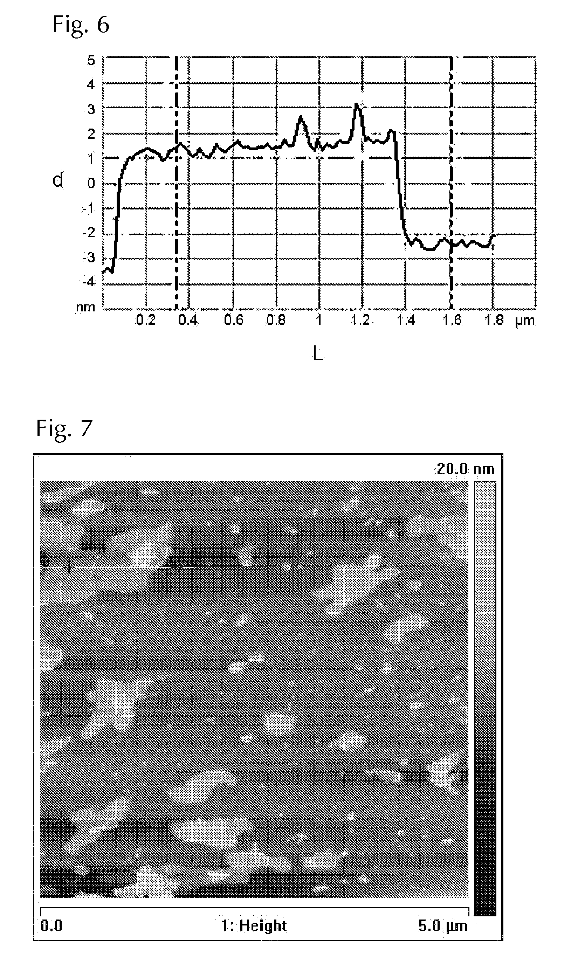

After five hours of grinding, an appropriate amount of the suspension was again spread on a silicon wafer and the thickness profile of 300 platelets was measured by means of atomic force microscopy. The distribution of the number density $n$ of the thicknesses $d$ of the graphite platelets is shown in Fig. 4, and Fig. 5 shows the corresponding cumulative distribution $Q_0$ of thicknesses. Fig. 6 shows the height profile across an exemplary graphene platelet. The value of L indicates the position along a line in the plane of the platelet. The cumulative thickness distribution of that mean value $d_{50}$ was determined to be 3.4 nm. In other words, 50% of the platelets are equal to or less than 3.4 nm in thick. Finally, Fig. 7 shows an atomic force micrograph of the platelets on the silicon dioxide substrate.

The features described in the above description, claims and figures can be relevant to the invention in any combination.

## Claims

1. A method of producing from particles of a layered material platelets comprising the layered material by exposing the particles to a mechanical grinding treatment using grinding media, **characterized in that** the stress energy of the grinding media $SE_{GM}$ is smaller than 10 $\mu$Nm.

2. The method according to any one of claims 1, **characterized in that** the particles of the layered material are mixed in a liquid medium; and the mixed-in particles are exposed to the mechanical grinding treatment thereby exfoliating at least some of the particles of the layered material to produce platelets of the layered material.

3. The method according to claim 2, **characterized in that** the content of the layered material in the mixture is more than 0,01 weight percent.

4. The method according to claim 2 or 3, **characterized in that** the mixture medium is an aqueous medium.

5. The method according to any one of claims 2 to 4, **characterized in that** the mixture contains a surfactant.

6. The method according to any one of the previous claims, **characterized in that** the milling beads are 800 $\mu$m or less in diameter.

7. The method according to any one of the previous claims, **characterized in that** the mechanical grinding treatment is applied to the dispersion by means of a stirred media mill.

8. The method according to claim 7, **characterized in that** the maximum circumferential velocity $v_t$ of the stirrer of the stirred media mill is smaller than 60 meters per second.

9. The method of any one of the previous claims, **characterized in that** the particles comprise graphite as a layered material.

10. The method of any one of the previous claims, **characterized in that** the layers are graphene layers.

11. The method of any one of the previous claims, **characterized in that** the particles of the layered material are 300 micrometers or less in diameter.

12. The method of any one of the previous claims, **characterized in that** the grinding treatment is performed at a temperature below 150°C.

## Patentansprüche

1. Verfahren zur Herstellung von Plättchen, die ein geschichtetes Material aufweisen, aus Partikeln aus dem geschichteten Material, wobei die Partikel einer mechanischen Mahlbehandlung unter Verwendung von Mahlmittel ausgesetzt werden, **dadurch gekennzeichnet, dass** die Beanspruchungsenergie des Mahlmittels $SE_{GM}$ kleiner als 10 $\mu$Nm ist.

2. Das Verfahren entsprechend Anspruch 1, **dadurch gekennzeichnet, dass** die Partikel aus dem geschichtetem Material in ein flüssiges Medium gemischt werden; und die hineingemischten Partikel der mechanischen Mahlbehandlung ausgesetzt werden, wodurch zumindest einige der Partikel aus dem geschichteten Material abblättern zur Herstellung von Plättchen aus dem geschichteten Material.

3. Das Verfahren entsprechend Anspruch 2, **dadurch gekennzeichnet, dass** der Gehalt des geschichteten Materials in der Mischung mehr als 0,01 Gewichtsprozent beträgt.

4. Das Verfahren entsprechend Anspruch 2 oder Anspruch 3, **dadurch gekennzeichnet, dass** das Mischungsmedium ein wässriges Medium ist.

5. Das Verfahren entsprechend einem der Ansprüche 2 bis 4, **dadurch gekennzeichnet, dass** die Mischung ein Tensid enthält.

6. Das Verfahren entsprechend einem der vorhergehenden Ansprüche, **dadurch gekennzeichnet,**

**dass** die Mahlkörper einen Durchmesser von 800 $\mu$m oder weniger aufweisen.

7. Das Verfahren entsprechend einer der vorhergehenden Ansprüche, **dadurch gekennzeichnet, dass** die mechanische Mahlbehandlung mittels einer Rührwerksmühle auf die Dispersion angewendet wird.

8. Das Verfahren entsprechend einem der vorhergehenden Ansprüche, **dadurch gekennzeichnet, dass** die maximale Umfangsgeschwindigkeit $v_t$ des Rührers der Rührwerksmühle kleiner als 60 Meter pro Sekunde ist.

9. Das Verfahren entsprechend einem der vorhergehenden Ansprüche, **dadurch gekennzeichnet, dass** die Partikel Graphit als geschichtetes Material enthalten.

10. Das Verfahren entsprechend einem der vorhergehenden Ansprüche, **dadurch gekennzeichnet, dass** die Schichten Graphenschichten sind.

11. Das Verfahren entsprechend einem der vorhergehenden Ansprüche, **dadurch gekennzeichnet, dass** die Partikel aus dem geschichteten Material einen Durchmesser von 300 Mikrometer oder weniger aufweisen.

12. Das Verfahren entsprechend einem der vorhergehenden Ansprüche, **dadurch gekennzeichnet, dass** die Mahlbehandlung bei einer Temperatur unter 150°C durchgeführt wird.

**Revendications**

1. Procédé de production de plaquettes à partir de particules d'un matériau multi-couches, comprenant le matériau multi-couches, en soumettant les particules à un traitement mécanique de broyage utilisant un abrasif, **caractérisé en ce que** l'efficacité énergétique de l'abrasif $SE_{GM}$ est inférieure à 10 $\mu$Nm.

2. Procédé selon la revendication 1, **caractérisé en ce que** les particules du matériau multi-couches sont mélangées dans un milieu liquide ; et les particules mélangées sont exposées au traitement mécanique de broyage, exfoliant de ce fait au moins certaines des particules du matériau multi-couches pour produire des plaquettes du matériau multi-couches.

3. Procédé selon la revendication 2, **caractérisé en ce que** le contenu du matériau multi-couches dans le mélange est supérieur à 0,01 pour cent en poids.

4. Procédé selon la revendication 2 ou 3, **caractérisé en ce que** le milieu de mélange est un milieu aqueux.

5. Procédé selon l'une quelconque des revendications 2 à 4, **caractérisé en ce que** le mélange contient un surfactant.

6. Procédé selon l'une quelconque des revendications précédentes, **caractérisé en ce que** les perles de broyage ont un diamètre de 800 $\mu$m ou moins.

7. Procédé selon l'une quelconque des revendications précédentes, **caractérisé en ce que** le traitement mécanique de broyage est appliqué à la dispersion au moyen d'un broyeur-agitateur.

8. Procédé selon la revendication 7, **caractérisé en ce que** la vitesse circonférentielle maximale $v_t$ de l'agitateur du broyeur-agitateur est inférieure à 60 mètres par seconde.

9. Procédé selon l'une quelconque des revendications précédentes, **caractérisé en ce que** les particules comprennent du graphite comme matériau multi-couches.

10. Procédé selon l'une quelconque des revendications précédentes, **caractérisé en ce que** les couches sont des couches de graphène.

11. Procédé selon l'une quelconque des revendications précédentes, **caractérisé en ce que** les particules du matériau multi-couches ont un diamètre de 300 micromètres ou moins.

12. Procédé selon l'une quelconque des revendications précédentes, **caractérisé en ce que** le traitement de broyage est réalisé à une température inférieure à 150°C.

Fig. 1

Fig. 2

Fig.3

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080279756 A1
- US 20080258359 A1
- US 2002054995 A1
- WO 2008143692 A1

**Non-patent literature cited in the description**

- **K. S. NOVOSELOV et al.** Electric field effect in atomically thin carbon films. *Science,* 2004, vol. 306 (5696), 666-9
- **M. LOTYA et al.** Liquid Phase Production of Graphene by Exfoliation of Graphite in Surfactant/Water Solutions. *Journal of the American Chemical Society,* 2009, vol. 131 (10), 3611-3620
- **H. SCHNIEPP et al.** Functionalized Single Graphene Sheets Derived from Splitting Graphite Oxide. *Journal of Physical Chemistry B,* 2006, vol. 110 (17), 8535-8539
- **S. STANKOVICH et al.** Stable aqueous dispersions of graphitic nanoplatelets via the reduction of exfoliated graphite oxide in the presence of poly(sodium 4-styrenesulfonate). *Journal of Materials Chemistry,* 2006, vol. 16 (2), 155-158
- **C. BERGER et al.** Electronic Confinement and Coherence in Patterned Epitaxial Graphene. *Science (Washington, DC, United States),* 2006, vol. 312 (5777), 1191-1196
- **N. LIU et al.** One-step ionic-liquid-assisted electrochemical synthesis of ionic-liquid-functionalized graphene sheets directly from graphite. *Advanced Functional Materials,* 2008, vol. 18 (10), 1518-1525
- **JANOT, RAPHAEL et al.** Ball-milling: the behavior of graphite as a function of the dispersal media. *Carbon,* 2002, vol. 40, 2887
- **WELHAM, N.J. et al.** Effect of extended ball milling on graphite. *Journal of Alloys and Compounds,* 2003, vol. 349, 255
- **CHEN, CHUN-NAN et al.** Surfactant-assisted de-agglomeration of graphite nanoparticles by wet ball milling. *Journal of Materials Processing Technology,* 2007, vol. 190, 61
- **Y. HERNANDEZ et al.** High-yield production of graphene by liquid-phase exfoliation of graphite. *Nature Nanotechnology,* 10 August 2008, vol. 3
- **LIN, SHI-YOW et al.** Determination of adsorption of an ionic surfactant on latex from surface tension measurements. *Colloids and Surfaces, A: Physicochemical and Engineering Aspects,* 2002, vol. 196 (2-3), 189-198